# EUROPEAN PATENT SPECIFICATION

(11) **EP 0 720 131 B1**
(45) Date of publication and mention of the grant of the patent: **24.03.1999**
(21) Application number: 95309412.5
(22) Date of filing: 22.12.1995
(51) Int. Cl.: G07F 19/00, G09B 21/00

(54) **A self-service transaction terminal**
Selbstbedienungs-Transaktions-Terminal
Terminal de transactions libre-service

(30) Priority: 29.12.1994 GB 9426325
(43) Date of publication of application: 03.07.1996
(73) Proprietor: NCR International, Inc., Dayton, Ohio 45479 (US)
(72) Inventor: Johnson, Graham I., Tayport, Fife, Dundee DD6 9AA (GB)
(74) Representative: Cleary, Fidelma

(56) References cited:
- EP-A- 0 535 417
- EP-A- 0 588 231
- WO-A-93/03468
- FR-A- 2 505 528
- US-A- 5 185 515
- US-A- 5 385 770
- PATENT ABSTRACTS OF JAPAN vol. 010, no. 351 (P-520) 27 November 1986 & JP-A-61 150 065 (OMRON TATEISI ELECTRONICS CO) 08 July 1986

## Description

The invention relates to a self-service transaction terminal, and has application for example to an automated teller machine (ATM).

Known ATMs commonly comprise: control means; a user interface through which the user communicates with the control means; a cash dispenser unit which is arranged to dispense cash to a user, under the control of the control means; and a printer which is arranged to print documents such as bank statements or account balances for a user, under the control of the control means.

User interfaces in known ATMs commonly incorporate: a card input slot, connected to a card reader, for receiving a user identification card; a visual display screen for presenting information to, and requesting information from, a user; a key pad for inputting information ; a cash dispensing slot, connected to a cash dispenser unit, for dispensing cash to a user; and a printer output slot, connected to a printer, for dispensing printed documents to a user. The visual display screen, key pad, card input slot, cash dispensing slot and printer output slot are all normally mounted in a front fascia of an ATM (See US-A-5 185 515). However, there is no uniformity with regard to the layout of the various elements of the user interface between different ATMs.

Due to the complexity of known user interfaces a user can find difficulty in locating specific elements of an interface such as the card input slot. This not only increases the time taken to operate the ATM but can also be frustrating for the user.

It is known for ATM user interfaces to rely on visual means, such as lighting up elements of the interface, in an attempt to alleviate this problem. However, this solution is of limited assistance to users who are visually impaired and is of no assistance to those users who are blind.

It is an object of the present invention to provide a self-service transaction terminal which alleviates the problem discussed above and which can be used by visually impaired or blind people.

According to the present invention there is provided a self-service transaction terminal having a user interface, characterized in that the surface of a portion of the user interface is textured, variation in the texture of the surface of said portion forming a guide means to guide a user towards an element of the interface.

An embodiment of the present invention will now be described, by way of example, with reference to the accompanying drawings in which:
Fig. 1 illustrates a perspective view of an ATM in accordance with the present invention;
Fig. 2 illustrates a schematic view of a portion of the surface of the user interface of the ATM of Fig. 1; and
Fig. 3 illustrates a block circuit diagram of the ATM of Fig. 1.

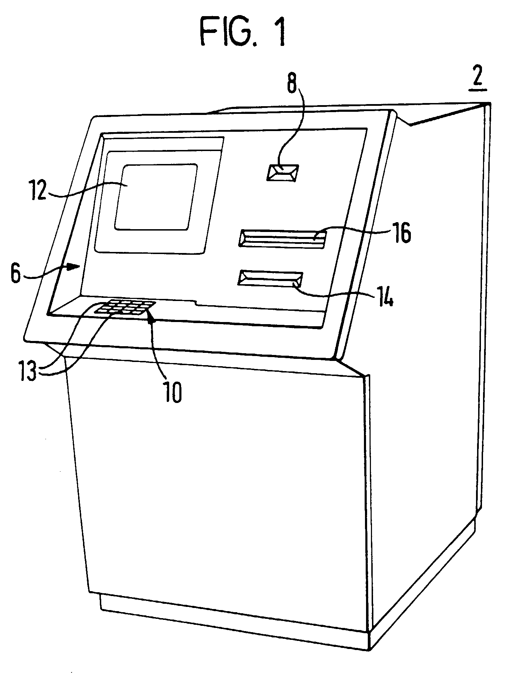

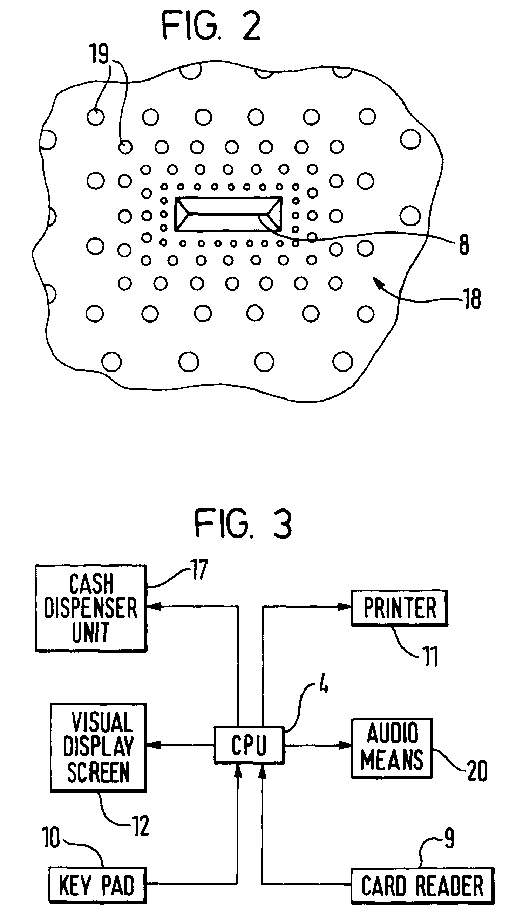

With reference particularly to Figs. 1 and 3, there is illustrated an ATM 2 in accordance with the present invention, which includes a control means in the form of a central processor unit (CPU) 4 which has stored therein a control program which controls the operation of the ATM 2

The ATM 2 includes a user interface 6 incorporating a card input slot 8, connected to a conventional card reader 9, for receiving a user identity card, a key pad 10 for inputting data, a visual display screen 12 for displaying user information, a cash dispensing slot 14 of a cash dispenser unit 17 for dispensing bank notes to a user, and a printer output slot 16 for dispensing printed documents to a user. The CPU 4 is connected to the card reader 9, the key pad 10, the display screen 12 and the cash dispenser unit 17. The CPU 4 is also connected to a conventional printer 11 for printing documents such as statements, receipts and account balances.

The key pad 10 consists of an array of keys 13 each of which is located in a respective individual recess (not shown). Thus visually impaired or blind users ca differentiate between individual keys 13 and can therefore input information into the ATM 2 through the key pad 10.

Referring particularly to Fig. 2 there is shown a part of a textured portion 18 of the surface of a user interface 6, in accordance with the present invention. The portion 18 surrounds the card input slot 8. Variation in the texture of the portion 18 forms a guide means to guide a user towards the card input slot 8, the portion 18 being rough at its outer edges and becoming smoother towards the card input slot 8. The textured nature of the portion 18 is produced by small protuberances 19 on the surface of the portion 18, and the change in texture is produced by increasing the density of the protuberances 19 and decreasing the size of each protuberance 19 towards the card input slot 8. Thus if a user touches the surface of the portion 18 of the interface 6 and moves his hand in the direction of the increasingly smooth surface he will be guided towards the card input slot 8.

Additional elements of the user interface 6, namely the key pad 10, the cash dispensing slot 14 and the printer output slot 16 are each provided with respective textured portions (not shown) which form guide means to guide the user to each of the additional elements. Thus as a visually impaired or blind user will normally be aware of the approximate location of each of the elements of the user interface 6 in relation to each other he can locate the textured portions of the surface of the interface 6 surrounding each of the required elements in turn and use the respective textured portions of the surface to guide him to the exact location of each element.

The user interface 6 also includes an audio means 20 (Fig. 3) arranged to provide a visually impaired or blind user with an indication that he should move from one element of the user interface 6 to another. For example, once the user has input his card into the card input slot 8 and the card has been read by the card reader 9 the user must move to the key pad 10 and input information into the ATM 2. Once the card reader has read the user's card the audio means will produce an audio signal to indicate to the user that he should move to the key pad 10. If the user requests the dispensing of cash, the CPU 4 will instruct the cash dispenser unit 17 to dispense cash to the user via the cash dispensing slot 14. Prior to this the CPU 4 will instruct the audio means 20 to produce the audio signal to inform the user that cash is about to be dispensed, so that he can move his hand to the cash dispensing slot 14 before the cash is dispensed. Further audio signals will be produced before a printed document or the user's user identification card are presented for collection, so the user can move his hand to the printer output slot 16 and the card input slot 8 prior to these items being presented.

In operation, the ATM 2 is accessed by the user inserting a user identification card into the card input slot 8. The user is guided to the card input slot 8 by touching the roughened surface of the portion 18 of the user interface 6 and moving his hand in the direction of the increasingly smooth surface until he reaches the card input slot 8. The card reader 9 within the ATM 2 reads the card and transmits information read from the card to the CPU 4. The information will include an encrypted PIN number which must be entered by the user to enable access to the ATM 2. In normal operation, the CPU 4 then causes the visual display screen 12 to present a display requesting the input of the required PIN number by the user, in order to confirm that the user is authorised to use the card. A visually impaired or blind user will know that the ATM 2 requires information, including a PIN number and accordingly after he has inserted the user identification card in the card input slot 8, and heard the audio signal discussed above, he will move his hand to the approximate area of the key pad 10 and locate the textured portion (not shown) of the surface of the interface 6 adjacent the key pad 10 and use this textured portion to locate the key pad 10 precisely. The user can then input the information required by the ATM 2, in order to process his transaction.

Once the user has input the information into the ATM 2 he will be required, for example, to remove cash from the cash dispensing slot 14, remove a statement or receipt from the printer output slot 16, and remove his user identification card from the card input slot 8. The user will locate the cash dispensing slot 14, the printer output slot 16 and the card input slot 8 by utilizing the textured portions of the surface of the interface 6 adjacent each of these elements of the user interface 6, as discussed above. Also as discussed above, the user will await the audible signal from the user interface 6 to instruct him to move from the element of the interface 6 he is presently using to the next element of the interface 6.

## Claims

1. A self-service transaction terminal (2) having a user interface (6), characterized in that the surface of a portion (18) of the user interface is textured, variation in the texture of the surface of said portion (18) forming a guide means to guide a user towards an element (8) of the interface (6).

2. A terminal according to claim 1, characterized in that said portion (18) of the interface surrounds said element (8).

3. A terminal according to claim 2, characterized in that the surface of said portion (18) is rough at the edges of said portion (18) and becomes smoother towards said first element (8).

4. A terminal according to any one of the preceding claims, characterized in that said element (8) comprises a card slot (8) for receiving a user identification card.

5. A terminal according to any one of the preceding claims, characterized in that said user interface (6) incorporates additional elements (10,14,16), portions of the surface of the user interface adjacent each of said additional elements (10,14,16) being textured so as to form guide means to guide a user to each of said additional elements (10,14,16).

6. A terminal according to claim 5, characterized in that said additional elements (10,14,16) comprise a data input means (10), a cash dispensing slot (14) and a printer output slot (16).

7. A terminal according to any one of the preceding claims, characterized in that the textured nature of the or each textured portion is formed by small protuberances (19) formed in the surface of the user interface (6).

8. A terminal according to claim 7, characterized in that said protuberances increase in density and decrease in size towards the associated element (8,10,14,16).

9. A terminal according to any one of the preceding claims, characterized in that said user interface (6) incorporates audio means (20) arranged to provide the user with an indication that he should move to another element of the user interface (6).

## Patentansprüche

1. Selbstbedienungsterminal (2) für Transaktionen mit einer Nutzerschnittstelle (6), dadurch gekennzeichnet, daß die Oberfläche eines Bereiches (18) der Nutzerschnittstelle texturiert ist, wobei Variation in der Textur der Oberfläche dieses Bereiches (18) ein Führungsmittel bildet, um einen Benutzer zu einem Element (8) der Schnittstelle (6) zu führen.

2. Terminal nach Anspruch 1, dadurch gekennzeichnet, daß der genannte Bereich (18) der Schnittstelle das besagte Element (8) umgibt.

3. Terminal nach Anspruch 2, dadurch gekennzeichnet, daß die Oberfläche des genannten Bereiches (18) an den Rändern dieses Bereiches (18) rauh ist und in Richtung auf das erste Element (8) glatter wird.

4. Terminal nach einem der vorhergehenden Ansprüche, dadurch gekennzeichnet, daß das genannte Element (8) einen Kartenschlitz (8) zum Empfang einer Teilnehmerkennkarte aufweist.

5. Terminal nach einem der vorhergehenden Ansprüche, dadurch gekennzeichnet, daß die Nutzerschnittstelle (6) zusätzliche Elemente (10, 14, 16) enthält, wobei Bereiche der Oberfläche der Nutzerschnittstelle in angrenzender Umgebung jedes dieser zusätzlichen Elemente (10, 14, 16) so texturiert sind, daß sie Führungsmittel zum Hinführen eines Benutzers an jedes dieser zusätzlichen Elemente (10, 14, 16) bilden.

6. Terminal nach Anspruch 5, dadurch gekennzeichnet, daß die zusätzlichen Elemente (10, 14, 16) Dateneingabemittel (10), einen Geldausgabeschlitz (14) und einen Druckerausgabeschlitz (16) enthalten.

7. Terminal nach einem der vorhergehenden Ansprüche, dadurch gekennzeichnet, daß die texturierte Natur des oder jedes texturierten Bereiches durch kleine Höcker (19) gebildet ist, die in der Oberfläche der Nutzerschnittstelle (6) gebildet sind.

8. Terminal nach Anspruch 7, dadurch gekennzeichnet, daß die Höcker in Richtung auf das zugeordnete Element (8, 10, 14, 16) in ihrer Dichte zunehmen und in ihrer Größe abnehmen.

9. Terminal nach einem der vorhergehenden Ansprüche, dadurch gekennzeichnet, daß die Nutzerschnittstelle (6) eine Audioeinrichtung (20) enthält, die dazu ausgelegt ist, dem Benutzer anzugeben, daß er zu einem anderen Element der Nutzerschnittstelle (6) übergehen soll.

## Revendications

1. Un terminal de transaction libre-service (2) possédant une interface-utilisateur (6), caractérisée par le fait que la surface d'une partie (18) de l'interface-utilisateur est texturée, les variations de texture de la surface de ladite partie (18) consistant un moyen de guidage pour guider un utilisateur vers un élément (8) de l'interface (6).

2. Un terminal selon la revendication 1, caractérisé par le fait que ladite partie (18) de l'interface entoure ledit élément (8).

3. Un terminal selon la revendication 2, caractérisé par le fait que la surface de ladite partie (18) est rugueuse au niveau des bords de ladite partie (18) et devient de plus en plus lisse vers ledit premier élément (8).

4. Un terminal selon n'importe quelle des revendications précédentes, caractérisé par le fait que ce dit élément (8) comprend une fente d'insertion de carte (8) destinée à recevoir la carte d'identification d'utilisateur d'un utilisateur.

5. Un terminal selon n'importe quelle des revendications précédentes, caractérisé par le fait que ladite interface-utilisateur (6) comprend des éléments supplémentaires (10, 14, 16), les parties de la surface de l'interface-utilisateur voisines desdits éléments supplémentaires (10, 14, 16) étant texturées de façon à former un moyen de guidage pour guider un utilisateur vers chacun desdits éléments supplémentaires (10, 14, 16).

6. Un terminal selon la revendication 5 caractérisé par le fait que lesdits éléments supplémentaires (10, 14, 16) comprennent un moyen d'entrée de données (10), une fente de distribution de billets (14) et une fente de sortie d'imprimante (16).

7. Un terminal selon n'importe quelle des revendications précédentes, caractérisé par le fait que la nature texturée de la, ou de chaque, partie texturée est constituée de petites protubérances (19) formées dans la surface de l'interface-utilisateur (6).

8. Un terminal selon la revendication 7, caractérisé par le fait que lesdites protubérances accroissent en densité et décroissent en taille en direction de l'élément associé (8, 10, 14, 16).

9. Un terminal selon n'importe quelle des revendications précédentes, caractérisé par le fait que ladite interface-utilisateur (6) comporte un moyen audio (20) destiné à donner à l'utilisateur une indication qu'il doit passer à un autre élément de l'interface-utilisateur (6).
